Europäisches Patentamt

European Patent Office

Office européen des brevets

(19)

(11) Veröffentlichungsnummer: **0 388 495 B1**

## (12) EUROPÄISCHE PATENTSCHRIFT

(45) Veröffentlichungstag der Patentschrift: **08.06.94**

(51) Int. Cl.⁵: **H04J 3/14**, H04L 1/00

(21) Anmeldenummer: **89105172.4**

(22) Anmeldetag: **22.03.89**

(54) **Verfahren zur Oualitätsüberwachung wenigstens zweier Übertragungsabschnitte einer Digitalsignal-Übertragungsstrecke und Vorrichtung zur Durchführung des Verfahrens.**

(43) Veröffentlichungstag der Anmeldung:
**26.09.90 Patentblatt 90/39**

(45) Bekanntmachung des Hinweises auf die Patenterteilung:
**08.06.94 Patentblatt 94/23**

(84) Benannte Vertragsstaaten:
**AT BE CH DE ES FR GB IT LI NL SE**

(56) Entgegenhaltungen:
**WO-A-85/00945**
**GB-A- 1 401 261**

**N.T.Z., Band 41, Heft 10, 1988, Seiten 570-574, Berlin, DE; W. EHRLICH et al.: "Die neue synchrone digitale Hierarchie"**

(73) Patentinhaber: **SIEMENS AKTIENGESELL-SCHAFT**
**Wittelsbacherplatz 2**
**D-80333 München(DE)**

(72) Erfinder: **Grallert, Hans-Joachim, Dr.-Ing.**
**Tannenfleckstrasse 30**
**D-8038 Gröbenzell(DE)**

**Beschreibung**

Die Erfindung bezieht sich auf ein wie im Oberbegriff des Patentanspruchs 1 angegebenes Verfahren und auf eine Vorrichtung zur Durchführung des Verfahrens.

Ein Verfahren der eingangs genannten Art ist bereits aus den CCITT - Empfehlungen G707 - G709 aus der DE-Z/NTZ Band 41 (1988) Heft 10, Seiten 570 bis 574 bekannt. Bei dem bekannten Verfahren werden bytestrukturierte PCM-Signale zusammen mit Paritätsbyte übertragen. Die Paritätsbytes dienen zur Bestimmung der Bitfehlerrate während der Übertragung. Im Regelfall wird die Parität aus den Bits eines ganzen Rahmens oder eines Teil-Rahmens gebildet und diese dann im nachfolgenden Rahmen oder Teil-Rahmen übertragen. Das Paritätsbyte B1 wird von jedem Zwischenregenerator kontrolliert und erneut gebildet. Damit können Fehler in einer Übertragungsstrecke auf den betroffenen Regeneratorabschnitt eingegrenzt werden. Das Paritätsbyte B2 dient dagegen zur Bitfehlererfassung einer Übertragungsstrecke zwischen zwei Leitungsenden. Das Paritätsbyte B3 ist im Pfadkopf (Path Overhead POH) eines jeden virtuellen Containers vorgesehen und steht daher für eine Qualitätsüberwachung von Teilen des physikalischen Netzes nicht zur Verfügung.

Dadurch, daß das Paritätsbyte jeweils am Anfang des Regeneratorabschnittes und das weitere Paritätsbyte B2 jeweils am Anfang der Übertragungsstrecke neu gebildet wird, lassen sich die Regeneratorabschnitte bzw. Übertragungsstrecken individuell überwachen, so daß Fehler in einer Übertragungsstrecke auf den betroffenen Regeneratorabschnitt bzw. Fehler auf einem Übertragungsweg auf die betroffene Übertragungsstrecke eingegrenzt werden können.

Ferner ist aus der DE-Z telcom report, Spezial, Multiplex- und Leitungseinrichtungen, Seiten 109 bis 114 bekannt, Digitalübertragungssysteme mit einer Einrichtung zur In-Betrieb-Überwachung zu versehen. Dabei enthalten die Zwischenregeneratoren jeweils eine Überwachungsschaltung, die über die laufende digitale Summe Verletzungen der Coderegel überwacht. Von Fehler-Bursts abgesehen, kann man damit auf die Bitfehlerhäufigkeit an der betreffenden Stelle schließen. Die sogenannte Fehlerquote wird in codierter Form zum Ortungsgerät übertragen. Im Ortungsgerät wird somit die Bitfehlerhäufigkeit bei jedem einzelnen Zwischenregenerator erfaßt. Auf diese Weise kann man in einer überwachenden Endstelle durch einen Vergleich der gemessenen Bitfehlerhäufigkeiten auf die Übertragungsqualität der einzelnen Regeneratorfelder schließen, so daß auch hier eine individuelle Überwachung von Übertragungsabschnitten möglich ist.

Zur Qualitätsüberwachung stehen nach den genannten CCITT-Empfehlungen G. 707...709 im Abschnittskopf (Section Overhead SOH) die Paritätsbytes B1 und B2 zur Verfügung, und zwar ein Paritätsbyte B1 je synchronem Transportmodul STM-N und ein Paritätsbyte B2 in jedem synchronen Transportmoudul STM-1. Das Paritätsbyte B1 erlaubt die Überwachung eines einzelnen Regeneratorabschnitts, das Paritätsbyte B2 die Überwachung eines Digitalsignalleitungsabschnittes. Eine durchgehende Überwachung über mehrere Digitalsignalleitungsabschnitte hinweg ist nach den CCITT-Empfehlungen mit diesen beiden Paritätsbytes nicht vorgesehen, da es für den Abschnittskopf SOH keine Möglichkeit zum Ausgleich von Frequenzunterschieden beim Übergang von Digitalsignalleitungsabschnittzu Digitalsignalleitungsabschnitt gibt. Es ist deshalb nicht möglich, vom Eingang bis zum Ausgang einer Digitalsignalleitung eine feste Verknüpfung von Paritätsbytes im Abschnittskopf zur Nutzinformation im virtuellen Container herzustellen.

Aufgabe der Erfindung ist es, ein Verfahren zu schaffen, das es gestattet, bei einer Übertragungseinrichtung mit aufeinanderfolgenden Übertragungsabschnitten, bei der vom Eingang bis zum Ausgang einer Übertragungsstrecke eine feste Verknüpfung von Paritätsbytes im Abschnittskopf zur Nutzinformation im virtuellen Container nicht möglich ist, Paritätsfehler für aufeinanderfolgende Übertragungsabschnitte zu akkumulieren. Außerdem soll eine zweckmäßige Vorrichtung zur Durchführung eines solchen Verfahrens angegeben werden.

Gemäß der Erfindung wird die gestellte Aufgabe bei einem Verfahren der eingangs genannten Art durch die im kennzeichnenden Teil des Patentanspruchs 1 angegebenen Maßnahmen gelöst. Dabei könnten die Übertragungsabschnitte der Übertragungsstrecke Leitungsabschnitte oder Leitungen sein.

Durch die erfindungsgemäßen Maßnahmen ergibt sich der Vorteil, daß sich die Übertragungsqualität einer Kettenschaltung mehrerer Übertragungsabschnitte durch Akkumulation der Paritätsfehler von aufeinanderfolgenden Übertragungsabschnitten unter Verwendung hierfür an sich nicht vorgesehener Mittel bestimmen läßt.

Vorteilhafte weitere Ausgestaltungen der Erfindung ergeben sich aus den Ansprüchen 2 bis 5. Eine zweckmäßige Vorrichtung zur Durchführung des Verfahrens geht aus Anspruch 6 hervor.

Die Erfindung wird anhand der in den Figuren dargestellten Ausführungsbeispiele näher erläutert.

Es zeigen

Fig. 1     eine     PCM-Übertragungseinrichtung mit zwei Digitalsignalleitungsabschnitten,

Fig. 2     die Verknüpfung zweier Bitfehlermuster zu einem dritten Bitfehlermuster,

Fig. 3 eine Zwischenstelle mit einer Vorrichtung zur Addition von Paritätsfehlerzahlen und

Fig 4 eine Zwischenstelle mit einer Vorrichtung zur Verknüpfung von Bitfehlermustern.

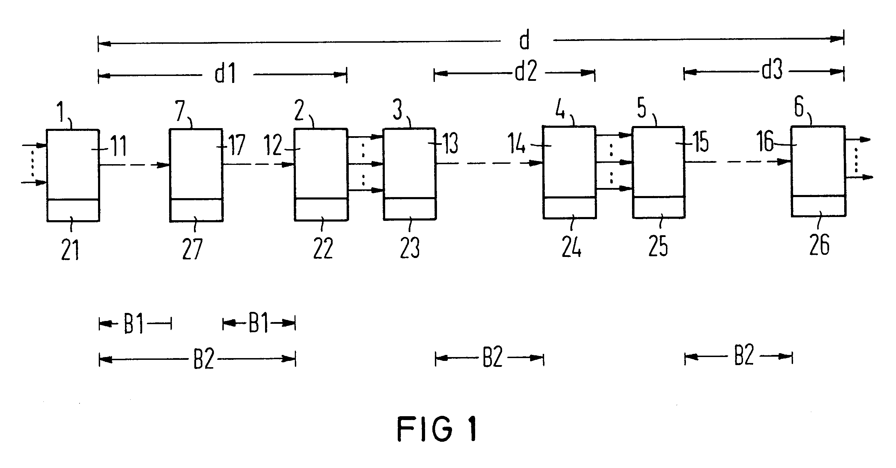

Figur 1 zeigt eine Einrichtung zur Übertragung digitaler Nutzsignale vom Leitungsendgerät 21 zum Leitungsendgerät 26 über die Übertragungsstrecke d.

Die Leitungsendgeräte 1 bis 6 enthalten zusätzlich zu einem Multiplexer 11, 13, 15 bzw. Demultiplexer 12, 14, 16 eine Überwachungsschaltung 21, 23...26 zur Bitfehlererkennung. Die Zwischenstelle 7 enthält einen Regenerator 17 und eine Überwachungsschaltung 27 zur Bitfehlererkennung. Die Überwachungsschaltungen 22...27 können über einen nicht dargestellten Rückkanal mit der Überwachungsschaltung 21 des Leitungsendgerätes 1 verbunden sein, der Bestandteil einer Einrichtung zur In-Betrieb-Überwachung der Übertragungseinrichtung ist.

Die Übertragungsstrecke d besteht aus den Digitalsignal-Leitungsabschnitten d1, d2 und d3, die im folgenden als Leitungsabschnitte bezeichnet werden. Zur Überwachung dieser drei aufeinanderfolgenden Übertragungsabschnitte werden zusätzlich zu den Nutzsignalen Paritätsbytes übertragen. Diese Paritätsbytes B2 werden am Anfang der Leitungsabschnitte d1, d2 bzw. d3 jeweils aus den Nutzsignalen abgeleitet und in die digitalen Nutzsignale eingefügt.

Am Ende der Leitungsabschnitte d1, d2 und d3 werden aus den empfangenen Nutzsignalen jeweils Paritätsbytes abgeleitet. Diese Paritätsbytes werden mit den empfangenen Paritätsbytes verglichen. Es findet somit ein Vergleich zwischen empfangenen Paritätsbytes und örtlich gebildeten Paritätsbytes statt. Dabei werden in vorgegebener Abhängigkeit vom Vergleichsergebnis Fehlermeldungen gebildet und gegebenenfalls über einen Rückkanal an die zentrale Überwachungsschaltung 21 gesendet.

Die Übertragungseinrichtung gehört der sogenannten synchronen digitalen Hierarchie an, wie sie aus den CCITT-Empfehlungen G707 bis G709 bekannt ist. Die digitale Übertragungsstrecke enthält daher am Anfang der Leitungsabschnitte d1, d2 und d3 jeweils einen synchronen Multiplexer 1, 3, 5 und am Ende der Leitungsabschnitte d1, d2, d3 jeweils einen synchronen Demultiplexer 2, 4, 6 und im Zuge der Leitung synchrone Regeneratoren wie z. B. den Regenerator 7.

Die Erkennung von Bitfehlern in den Regeneratorabschnitten geschieht durch Paritätsbytes B1, die in jedem Regenerator, z. B. im Regenerator 7 neu berechnet und in den Datenstrom eingesetzt werden.

Gegebenenfalls auftretende Paritätsfehler werden in den Überwachungsschaltungen 22...26 und 27 gezählt, mit Schwellen verglichen und gegebenenfalls in Alarmmeldungen umgesetzt.

Ohne besondere Maßnahmen, wie sie im folgenden beschrieben werden, ist bei der betrachteten Übertragungseinrichtung eine Überwachung einzelner Regenerator- oder Leitungsabschnitte, nicht jedoch eine Überwachung über mehrere Leitungsabschnitte hinweg vorgesehen, da es für den Abschnittskopf (Section Overhead) SOH keine Möglichkeit zum Ausgleich von Frequenzunterschieden beim Übergang von Leitungsabschnitt zu Leitungsabschnitt gibt und es daher nicht möglich ist, eine feste Verknüpfung von Paritätsbytes im Abschnittskopf zur Nutzinformation im virtuellen Container herzustellen.

Die im folgenden beschriebenen Verfahren kommen ohne die Verknüpfung aus und basieren auf der Erkenntnis, daß zur Qualitätsüberwachung eines Übertragungsabschnittes eine Fehlerstatistik über einen vergleichsweise kurzen Zeitraum ausreicht, so daß sich die genannten Frequenzunterschiede nicht störend auswirken.

Bei einer ersten Verfahrensvariante wird am Ende des Leitungsabschnittes d1 die Zahl der Paritätsfehler ZPF (1) je synchronem Transportmodul STM-1 aus dem Paritätsbyte B2 ermittelt, zum Eingang des Leitungsabschnittes d2 transportiert und dort im Abschnittskopf bzw. Section Overhead SOH des entsprechenden Standardtransportmoduls STM-1 übertragen. Am Ende des Leitungsabschnittes d2 wird die Zahl der Paritätsfehler ZPF (2) berechnet und die Summe aus der Zahl ZPF (1) und der Zahl ZPF (2) zur weiteren Übertragung bereitgestellt.

Am Ausgang der Digitalsignalleitung stehen die akkumulierten Paritätsfehler

$$ZPF_a = \sum_{i=1}^{n} ZPF\ (i)$$

jeweils aus einer Zahl n aufeinander folgender Leitungsabschnitte in jedem empfangenen Rahmen bereit.

Die Qualität der Digitalsignalleitung wird anhand einer Kurzzeit-Statistik über eine zeitliche Folge von m akkumulierten Paritätsfehlerzahlen $ZPF_a$-(t) beurteilt, d. h. über

$$\sum_{t=1}^{m} ZPF_a\ (t)$$

Aufgrund von Frequenzunterschieden zwischen den Leitungsabschnitten d1...d3 kann - in relativ seltenen Fällen - beim Übergang von einem Leitungsabschnitt j zum nächsten Leitungsabschnitt j + 1 für die Dauer eines einzigen Rahmens die bis zu dieser Stelle akkumulierte Zahl von Paritätsfehlern

$$\sum_{i=1}^{j} ZPF\ (i)$$

verlorengehen oder zweimal übertragen werden.

Da die Beurteilung der Übertragungsqualität der Digitalsignalleitung auch bei der vorgesehenen Auswertung über einen kurzen Zeitraum auf einer Statistik über relativ viele Rahmen von Standardtransportmodulen STM-1 beruht, wirkt sich dies jedoch auf das Auswerteergebnis praktisch nicht aus.

Wird z. B. ausgehend von der Dauer eines Rahmens von 125 μsec., wie sie bei der synchronen digitalen Hierarchie vorgesehen ist, eine Zahl von 100 Rahmen ausgewertet, so ergibt sich eine Zeitspanne von 12,5 msec. Der vorgesehene Auswertezeitraum liegt insbesondere im Bereich von 10 msec bis 15 msec.

Einer zweiten Variante des Verfahrens liegt der Gedanke zugrunde, über die gesamte Digitalsignalleitung ein Paritätssignal zu generieren. Dabei werden zwei einzelne Paritätsfehler, die in der gleichen Paritäts-Spur, aber in unterschiedlichen Leitungsabschnitten auftreten, nicht erkannt.
Am Ausgang des Leitungsabschnittes d1 wird je synchronem Transportmodul STM-1 aus dem Paritätsbyte B2 ein Paritätsfehler-Muster PFM (1) ermittelt. Ein solches Paritätsfehler-Muster ergibt sich dadurch, daß zur formalen Bildung eines Paritätswortes der zu erfassende Bit-Block zunächst bitweise in Teilblöcke zerlegt und anschließend für jeden Teilbitblock das Paritätsbit gebildet wird. Die so ermittelten Paritätsbits ergeben dann das Paritätswort. Dieses Verfahren ist unter dem Begriff des Bit-Interleaved-Parity (BIP) bekannt.

Das Paritätsfehler-Muster PFM (1) wird am Eingang des Leitungsabschnittes d2 in den Abschnittskopf des entsprechenden synchronen Transportmoduls STM-1 eingeblendet und übertragen. Am Ende des Leitungsabschnittes d2 wird ein Paritätsfehler-Muster PFM (2) ermittelt und anschließend mit dem Paritätsfehler-Muster (1) bitweise über eine Exclusiv ODER-Funktion zum Paritätsfehler-Muster (1, 2) verknüpft.

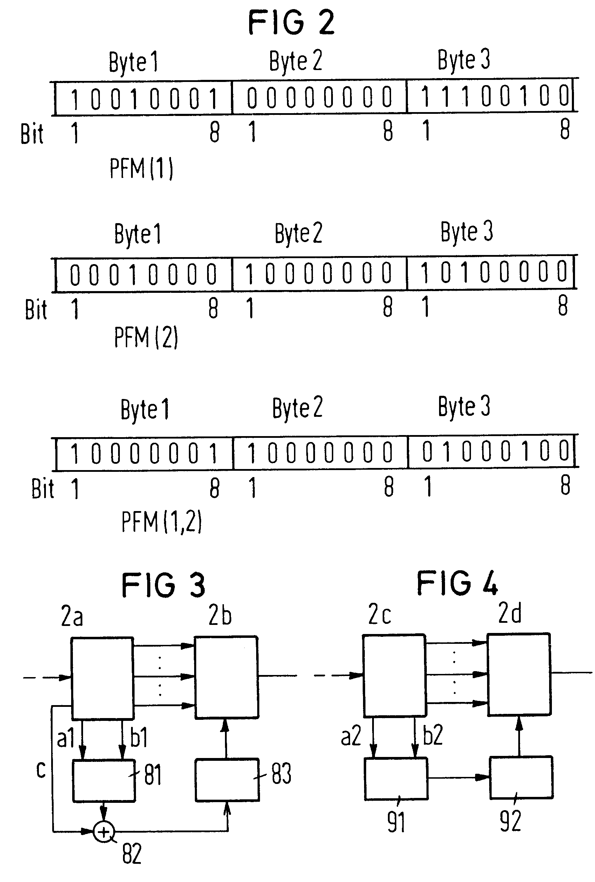

Figur 2 zeigt solche Muster, bei denen die in den einzelnen Spuren erkannten Fehler jeweils durch eine 1 markiert sind.

Durch diese Verknüpfung wird folgendes erreicht:

a) die Summe der "1" im Paritätsfehler-Muster PFM (1, 2) gibt die Anzahl der erkannten, bis zum Ausgang des Leitungsabschnittes d2 aufgelaufenen Paritätsfehler an.

b) zwei einzelne Paritätsfehler, die in der gleichen Spur, aber in unterschiedlichen Leitungsabschnitten auftreten, werden wie ein Doppelfehler behandelt, d. h. sie wirken sich im endgültigen Auswerteergebnis nicht aus.

Das Paritätsfehler-Muster PFM (1, 2) wird über den Leitungsabschnitt d3 übertragen. Im Leitungsendgerät 6 wird ein Paritätsfehler-Muster PFM (3) ermittelt und anschließend mit dem Paritätsfehler-Muster (1, 2) bitweise über eine Exclusiv-ODER-Funktion zum Paritätsfehler-Muster (1, 2, 3) verknüpft. Am Ausgang der Digitalsignalleitung d steht somit ein Paritätsfehler-Muster für die gesamte Digitalsignalleitung zur Verfügung.

Bezüglich der Auswirkungen von Frequenzunterschieden zwischen benachbarten Digitalsignal-Leitungsabschnitten gilt sinngemäß das gleiche wie für die erste Verfahrensvariante.

Bei der erstgenannten Verfahrensvariante wird die Akkumulation der Paritätsfehler zweckmäßigerweise mittels einer Vorrichtung durchgeführt, wie sie die in Fig.3 gezeigte Zwischenstelle aufweist. Die in Fig.3 gezeigte Zwischenstelle enthält zusätzlich zu den Rücken an Rücken angeordneten Leitungsendgeräten 2a und 2b die Vorrichtung 81 zur Berechnung der Bitfehlerzahl ZPF (i) des vorangegangenen i-ten Leitungsabschnittes, den Addierer 82 und die Vorrichtung 83. Vom Leitungsendgerät 2a aus werden der Vorrichtung 81 über die Verbindung a1 die vom Leitungsendgerät 2a empfangenen Paritätsbytes und über die Verbindung b1 die aus dem Nutzsignal berechneten Paritätsbytes zugeführt. In der Vorrichtung 81 werden diese Bytes miteinander verglichen. Die dabei gewonnene Zahl der Paritätsfehler ZPF (i) des i-ten Leitungsabschnittes wird im Addierer 82 zu der über die Verbindung c ankommenden Zahl ZPF (1,...i-1), d. h. zu der Summe der Bitfehlerzahlen aus den dem letzten Leitungsabschnitt vorangehenden Leitungsabschnitten addiert. Die so gebildete Summe wird der Vorrichtung 83 zur Einblendung in den vom Leitungsendgerät 2b ausgehenden Bitstrom zugeführt. Zur Übertragung der Summe dienen dabei Spezialbytes der Abschnittsköpfe der synchronen Transportmodule, die nach den genannten CCITT-Empfehlungen einem besonderen Gebrauch vorbehalten sind.

Am Ende der Digitalsignalleitung stehen die akkumulierten Paritätsfehler am Ausgang des Addierers 82 bereit und die Vorrichtung 83 entfällt.

Bei der zweitgenannten Verfahrensvariante wird die Akkumulation der Paritätsfehler zweckmäßigerweise mittels einer Vorrichtung durchgeführt, wie sie die in Fig. 4 gezeigte Zwischenstelle aufweist.

Die in Fig.4 gezeigte Zwischenstelle enthält zusätzlich zu den Rücken an Rücken angeordneten Leitungsendgeräten 2c und 2d die Vorrichtung 91 zur Bildung eines Paritätsfehler-Musters und die Vorrichtung 92 zur Einblendung des Bitfehlermusters in den vom Leitungsendgerät 2d ausgehenden Bitstrom. Die Vorrichtung 91 bildet aus dem über die Leitung a2 empfangenen ersten Bitmuster und dem über die Leitung b2 empfangenen zweiten Bitmuster in der Weise, wie sie aus Fig.2 hervorgeht ein drittes Bitfehlermuster. Dieses Bitfehlermuster wird mit Hife der Vorrichtung 92 in den vom Leitungsendgerät 2d ausgehenden Bitstrom eingefügt. Am Ausgang der Digitalsignalleitung stehen die akkumulierten Paritätsfehler am Ausgang der Vorrichtung 91 als Paritätsfehler-Muster bereit und die Vorrichtung 92 entfällt.

Eine besonders einfache Realisierung der nach den Verfahren vorgesehenen Akkumulation von Bitfehlerzahlen ergibt sich dann, wenn die Paritätsfehlerzahlen $PFZ_a$ (i) bzw. das Paritätsfehlermuster PFM (1, 2,...j) zwischen den synchronen Leitungsmultiplexern der jeweiligen Zwischenstelle auf den gleichen Leitungen übertragen werden wie die Nutzsignale.

**Patentansprüche**

1. Verfahren zur Qualitätsüberwachung wenigstens zweier in Kette geschalteter Übertragungsabschnitte (d1 ... d3) einer Digitalsignal-Übertragungsstrecke (d), für Übertragungseinrichtungen entsprechend einer synchronen digitalen Hierarchie, bei der in virtuellen Containern von synchronen Transportmodulen Nutzsignale übertragen werden und Abschnittsköpfe der synchronen Transportmodule Paritätsbytes (B2) und einem besonderen Gebrauch vorbehaltene Spezialbytes aufweisen und wobei jeweils am Ende der Übertragungsabschnitte aus den empfangenen Nutzsignalen Paritätsbytes abgeleitet und mit den empfangenen Paritätsbytes (B2) verglichen und in vorgegebener Abhängigkeit vom Ergebnis dieses Vergleichs ein Fehlersignal gebildet wird,
   **dadurch gekennzeichnet,**
   daß in wenigstens einer Zwischenstelle (2, 3; 4, 5; 2a, 2b; 2c, 2d) aus dem Fehlersignal ein Fehlermeldebyte abgeleitet und als eines der Spezialbytes über den nachfolgenden Übertragungsabschnitt (d2, d3) übertragen wird und daß am Ende wenigstens eines nachfolgenden Übertragungsabschnittes (d2, d3) aus dem empfangenen Fehlermeldebyte und dem örtlich gebildeten Fehlersignal ein neues Fehlermeldebyte abgeleitet wird und daß durch Auswertung einer Folge von Fehlermeldebytes ein Qualitätskriterium für die überwachte Übertragungsstrecke (d) gewonnen wird.

2. Verfahren nach Anspruch 1,
   **dadurch gekennzeichnet,**
   daß eine derart große Zahl aufeinanderfolgender Fehlermeldebytes ausgewertet wird, daß die durch den Verlust oder dem zweimaligen Empfang von Spezialbytes hervorgerufene Änderung des Auswerteergebnisses ein vorgegebenes Maß unterschreitet.

3. Verfahren nach Anspruch 1 oder 2,
   **dadurch gekennzeichnet,**
   daß bei der Gewinnung des Fehlersignales die Zahl der Paritätsfehler ermittelt wird und daß bei der Ableitung des neuen Fehlermeldebytes die Zahl der sich aus dem Fehlersignal ergebenden Paritätsfehler zu der vom empfangenen Fehlermeldebyte gemeldeten Zahl der Paritätsfehler addiert wird.

4. Verfahren nach Anspruch 1 oder 2,
   **dadurch gekennzeichnet,**
   daß bei der Gewinnung des Fehlersignals je Transportmodul ein Paritätsfehler-Muster (PFM (2) ) gebildet wird und daß bei der Ableitung des Fehlermeldebytes jeweils das örtlich gebildete Paritätsfehler-Muster (PFM (2) ) und das empfangene Paritätsfehler-Muster (PFM (1) ) bitweise über eine Exclusiv-ODER-Funktion (91) verknüpft werden.

5. Verfahren nach einem der vorhergehenden Ansprüche,
   **dadurch gekennzeichnet,**
   daß die Fehlermeldebytes zwischen synchronen Leitungsmultiplexern der jeweiligen Zwischenstelle auf den gleichen Leitungen übertragen werden, wie die Nutzsignale.

6. Vorrichtung zur Qualitätsüberwachung wenigstens zweier in Kette geschalteter Übertragungsabschnitte (d1 ... d3) einer Digitalsignal-Übertragungsstrecke (d), für Übertragungseinrichtungen entsprechend einer synchronen digitalen Hierarchie, wobei Leitungsendgeräte (1, 6) synchrone Multiplexer (11) oder Demultiplexer (16) und Überwachungsschaltungen (21, 26) und Zwischenstellen synchrone Regeneratoren (2, 3; 4, 5) und Überwachungsschaltungen (22, 23; 24, 25) enthalten,
   **dadurch gekennzeichnet,**
   daß in wenigstens einer der Zwischenstellen (2, 3; 4, 5; 2a, 2b; 2c, 2d) eine Vorrichtung zur Ableitung von Vergleichssignalen aus den empfangenen Nutzsignalen, eine Vorrichtung zum Vergleich der empfangenen Paritätsbytes mit den örtlich erzeugten Vergleichssignalen und eine Vorrichtung (81, 82; 91) zur Ableitung von Fehlermeldesignalen vorgesehen sind und daß eine Vorrichtung (83, 92) zur weiteren Übertragung der Fehlermeldesignale über den nächsten Übertragungsabschnitt (d2, d3) und eine Vorrichtung zur Auswertung einer Folge von Fehlermeldesignalen vorgesehen sind.

## Claims

1. Method of monitoring the quality of at least two series-connected transmission sections (d1 ... d3) of a digital signal transmission link (d), for transmission devices conforming to a synchronous digital hierarchy, in which information signals are transmitted in virtual containers of synchronous transport modules and section overheads of the synchronous transport modules have parity bytes (B2) and special bytes reserved for special use, and in which parity bytes are derived from the information signals at the end of the transmission sections in each case and are compared with the received parity bytes (B2), and an error signal is formed in predetermined dependence on the result of this comparison, characterized in that an error message byte is derived from the error signal in at least one intermediate station (2, 3; 4, 5; 2a, 2b; 2c, 2d) and is transmitted as one of the special bytes over the following transmission section (d2, d3), and in that at the end of at least a following transmission section (d2, d3) a new error message byte is derived from the received error message byte and the locally formed error signal, and in that a quality criterion for the monitored transmission link (d) is obtained by evaluating a series of error message bytes.

2. Method according to Claim 1, characterized in that such a large number of successive error message bytes is evaluated that the alteration of the evaluation result caused by the loss or the double reception of special bytes falls below a predetermined level.

3. Method according to Claim 1 or 2, characterized in that the number of parity errors is calculated when obtaining the error signal, and in that during the derivation of the new error message byte the number of parity errors indicated by the error signal is added to the number of parity errors reported by the received error message byte.

4. Method according to Claim 1 or 2, characterized in that a parity error pattern (PFM (2) ) is formed for each transport module when obtaining the error signal, and in that in each case the locally formed parity error pattern (PFM (2) ) and the received parity error pattern (PFM (1) ) are gated bit-by-bit using an exclusive-OR function (91) during the derivation of the error message byte.

5. Method according to one of the preceding claims, characterized in that the error message bytes are transmitted between synchronous line multiplexers of the respective intermediate station on the same lines as the information signals.

6. Device for monitoring the quality of at least two series-connected transmission sections (d1 ... d3) of a digital signal transmission link (d), for transmission devices conforming to a synchronous digital hierarchy, in which line terminals (1, 6) contain synchronous multiplexers (11) or demultiplexers (16) and monitoring circuits (21, 26), and intermediate stations contain synchronous regenerators (2, 3; 4, 5) and monitoring circuits (22, 23; 24, 25), characterized in that a device for deriving comparison signals from the received information signals, a device for comparing the received parity bytes with the locally generated comparison signals, and a device (81, 82; 91) for deriving error message signals are provided in at least one of the intermediate stations (2, 3; 4, 5; 2a, 2b; 2c, 2d), and in that a device (83, 92) for the further transmission of the error message signals over the next transmission section (d2, d3) and a device for evaluating a series of error message signals are provided.

## Revendications

1. Procédé de contrôle de qualité d'au moins deux sections de transmission (d1...d3), branchés en série, d'une voie (d) de transmission de signaux numériques, pour des dispositifs de transmission conformément à une hiérarchie numérique synchrone, dans laquelle des signaux utiles sont transmis dans des conteneurs virtuels de modules de transport synchrones, et des têtes de section des modules de transport synchrones comportent des octets de parité (B2) et des octets spéciaux réservés pour une utilisation particulière, et selon lequel des octets de parité sont dérivés des signaux utiles reçus, respectivement à la fin des sections de transmission et sont comparés aux octets de parité (B2) reçus et un signal d'erreur est formé en fonction, d'une manière prédéterminée, du résultat de cette comparaison, caractérisé par le fait que dans au moins un poste intermédiaire (2, 3; 4, 5; 2a, 2b; 2c, 2d), un octet de signalisation d'erreur est dérivé du signal d'erreur et est transmis en tant que l'un des octets spéciaux, par l'intermédiaire de la section suivante de transmission (d2, d3) et qu'à la fin d'au moins une section suivante de transmission (d2, d3), un nouvel octet de signalisation d'erreur est dérivé de l'octet de signalisation d'erreur reçu et du signal d'erreur formé localement, et qu'un critère de qualité pour la voie de transmission (d) contrôlée est otenue à partir de l'évaluation d'une succession d'octets de signalisation d'erreurs.

2. Procédé suivant la revendication 1, caractérisé par le fait qu'un nombre tel d'octets successifs de signalisation d'erreurs est évalué, que la modification du résultat d'évaluation, due à la perte ou à la réception double d'octets spéciaux, est au-dessous d'une valeur prédéterminée.

3. Procédé suivant la revendication 1 ou 2, caractérisé par le fait que lors de l'obtention du signal d'erreur, le nombre des erreurs de parité est déterminé et que, lors de la dérivation du nouvel octet de signalisation d'erreur, le nombre des erreurs de parité obtenues à partir du signal d'erreur est ajouté au nombre des erreurs de parité, qui est signalé par l'octet de signalisation d'erreur reçu.

4. Procédé suivant la revendication 1 ou 2, caractérisé par le fait que, lors de l'obtention du signal d'erreur, pour chaque module de transport, un modèle d'erreur de parité (PFM(2)) est formé et que lors de la dérivation de l'octet de signalisation d'erreur, le modèle d'erreur de parité (PFM(2)) formé localement et le modèle d'erreur de parité (PFM(1)) reçu sont combinés, bit par bit, au moyen d'une fonction OU-Exclusif (91).

5. Procédé suivant l'une des revendications précédentes, caractérisé par le fait que les octets de signalisation d'erreurs sont transmis entre des multiplexeurs synchrones de ligne du poste intermédiaire respectif, dans les mêmes lignes que les signaux utiles.

6. Dispositif de contrôle de qualité d'au moins deux sections de transmission (d1...d3), branchées en série, d'une voie (d) de transmission de signaux numériques, pour des dispositifs de transmission conformément à une hiérarchie numérique synchrone, dans lequel des terminaux de lignes (1, 6) comportent des multiplexeurs synchrones (11) ou des démultiplexeurs synchrones (16), et des circuits de contrôle (25, 26) et des postes intermédiaires comportent des régénérateurs synchrones (2, 3; 4, 5) et des circuits de contrôle (22, 23; 24, 25),

caractérisé par le fait que dans au moins l'un des postes intermédiaires (2, 3; 4, 5; 2a, 2b; 2c, 2d) est prévu un dispositif destiné à dériver des signaux de comparaison à partir des signaux utiles reçus, un dispositif destiné à comparer les octets de parité reçus à des signaux de comparaison produits localement, et un dispositif (81, 82; 91) destiné à dériver des signaux de signalisation d'erreurs, et qu'il est prévu un dispositif (83, 92) destiné à la transmission ultérieure des signaux de signalisation d'erreurs dans la section de transmission (d2, d3) immédiatement suivante et un dispositif destiné à évaluer une succession de signaux de signalisation d'erreurs.

FIG 1

# FIG 2

| Byte 1 | Byte 2 | Byte 3 |
|---|---|---|
| 1 0 0 1 0 0 0 1 | 0 0 0 0 0 0 0 0 | 1 1 1 0 0 1 0 0 |

Bit  1            8  1            8  1            8

PFM (1)

| Byte 1 | Byte 2 | Byte 3 |
|---|---|---|
| 0 0 0 1 0 0 0 0 | 1 0 0 0 0 0 0 0 | 1 0 1 0 0 0 0 0 |

Bit  1            8  1            8  1            8

PFM (2)

| Byte 1 | Byte 2 | Byte 3 |
|---|---|---|
| 1 0 0 0 0 0 0 1 | 1 0 0 0 0 0 0 0 | 0 1 0 0 0 1 0 0 |

Bit  1            8  1            8  1            8

PFM (1,2)

# FIG 3

# FIG 4